# EUROPEAN PATENT SPECIFICATION

(11) **EP 0 448 844 B1**
(45) Date of publication and mention of the grant of the patent: **15.12.1993**
(21) Application number: 90200718.6
(22) Date of filing: 27.03.1990
(51) Int. Cl.: A01D 41/14

(54) **Combine harvester feeder house for mounting header on base unit**
Mähdrescher-Elevator zum Anschliessen der Mähwerksplattform an der Basis-Einheit
Dispositif convoyeur de moissonneuse-batteuse pour accoupler le tablier de coupe à l'unité de base

(43) Date of publication of application: 02.10.1991
(73) Proprietor: NEW HOLLAND BELGIUM N.V., B-8210 Zedelgem (BE)
(72) Inventor: Vermeulen, Antoon G., B-8040 Oostkamp (BE)
(74) Representative: Vandenbroucke, Alberic

(56) References cited:
- EP-A- 0 094 807
- DE-A- 1 582 366
- GB-A- 1 105 386
- US-A- 3 981 125
- US-A- 4 266 391
- US-A- 4 362 005
- US-A- 4 707 972

## Description

The present invention relates generally to crop harvesting machines, commonly referred to as combines, and, more particularly to providing a feeder house for mounting a header on a combine harvester base unit and which gives flexibility to adjusting the position of the header both relative to the ground and to conveyor means in the feeder house.

Combines are equipped to utilize a variety of crop gathering headers, including headers specifically designed for harvesting maize (USA : corn), cereal grains or soy beans. Normally, these headers are attached to the forward end of the feeder house, which is a structure used to convey crop material from the header to the combine base unit for further harvesting treatment. Usually, the feeder house structure is rectangular in shape and includes a rectangular crop inlet opening at the forward end.

Providing the capability for a combine header to both rotate laterally, to follow the contour of the ground, and to pivot in a fore-and-aft direction, to adjust the cutting angle of the header cutting means relative to the ground, has become increasingly desirable. As can be seen in US-A-3.981.125; US-A-3.731.470; US-A-3.638.407 and US-A-3.474.606, various structures have been developed to provide either one function or the other. EP-A-0.243.540; US-A-4.253.295; US-A-4.266.391; US-A-4.266.392 and US-A-4707.972 on the other hand disclose constructions which provide both functions in combination.

Changing the cutting angle of the header cutting means relative to the ground is particularly important for the harvest of soy beans, as the grain portion of this crop lies closer to the ground than for other crops. Furthermore, since changing tire sizes on the combine causes changes in the aforementioned cutting angle, it is of further importance to provide such a capability to correct such cutting angle changes.

Lateral flotation of the header has an increasingly greater importance with the increasing sizes of crop gathering headers because the larger headers are more susceptible to changes in the ground contour in that a ground contour change could result in one end of the header being above the crop material with no crop being harvested. To provide the header with the capability to float, and thereby follow the ground contour, enables the header to gather more crop material and reduce losses.

While the afore described capabilities of both lateral header flotation and cutting angle adjustment provide the advantages as explained, feeder houses of this type still face a problem in that the crop transfer from the header to the feeder house sometimes is less than fully satisfactory due to the distance between the header auger and the forwardmost portion of the feeder house crop conveying means differing, for a plurality of reasons, from the ideal distance which itself even may change under varying circumstances. It indeed has been found that the distance between the header auger and said conveying means in the feeder house is critical and that a deviation from the ideal relative positions of these components detrimentally affects the efficiency of the feeder house conveying means in engaging crop material to feed it rearwadly.

Consequently, it is the objective of the present invention to also provide maximum flexibility in this area in feeder houses equipped with either only a front face assembly suited to adjust the cutting angle of the header cutting means or a front face assembly having a cradle assembly connected thereto; this combination permitting lateral header flotation in addition to said cutting angle adjustment.

Accordingly to the present invention a feeder house is provided which is adapted for detachably mounting a crop harvesting header on a mobile combine harvester base unit and which includes :
- an elongated body portion defining a passageway terminating, at opposite ends, in crop inlet and discharge openings and being connectable, generally at said discharge opening, to a base unit and, in use, having its inlet opening positioned adjacent a header supported by the feeder house on said base unit;
- crop conveying means housed within the passageway for, in use, transporting crop material from the header longitudinally through said passageway to the base unit;
- a front face assembly pivotally movably attached to the body portion generally adjacent the inlet opening thereof for selective pivotal adjustment relative thereto around a transverse pivot axis; said front face assembly including header connecting means for attaching the header thereto in a forwardly projecting position and having a crop passage opening therethrough substantially registered with the body portion crop inlet opening and generally registrable with a crop discharge opening in the header; and
- locking means for fixedly securing the front face assembly in any selected adjustment position relative to the feeder house body portion; and
   which is characterized in that
   the pivotal mounting of the front face assembly additionally also is generally longitudinally adjustable relative to the feeder house body portion.

A combine harvester equipped with either one of two feeder houses in accordance with the present invention will now be described in greater detail, by way of example, with reference to the accompanying drawings, in which :
Figure 1 is a schematic side elevational view, partially in section, of the forward portion of a combine harveser including the header and feeder house areas;
Figure 2 is a side elevational view, on a larger scale, of the forward portion of the feeder house showing the front face assembly and the cradle assembly in accordance with the preferred embodiment of the present invention; the detachable header partially being shown in phantom proximate to the cradle assembly; and
Figure 3 is a view similar to Figure 2 but illustrating an alternative embodiment of the present invention.

In the following description, terms such as "forward", "rearward", "left", "right" etc.... are used which are words of convenience and which are not be be construed as limiting terms.

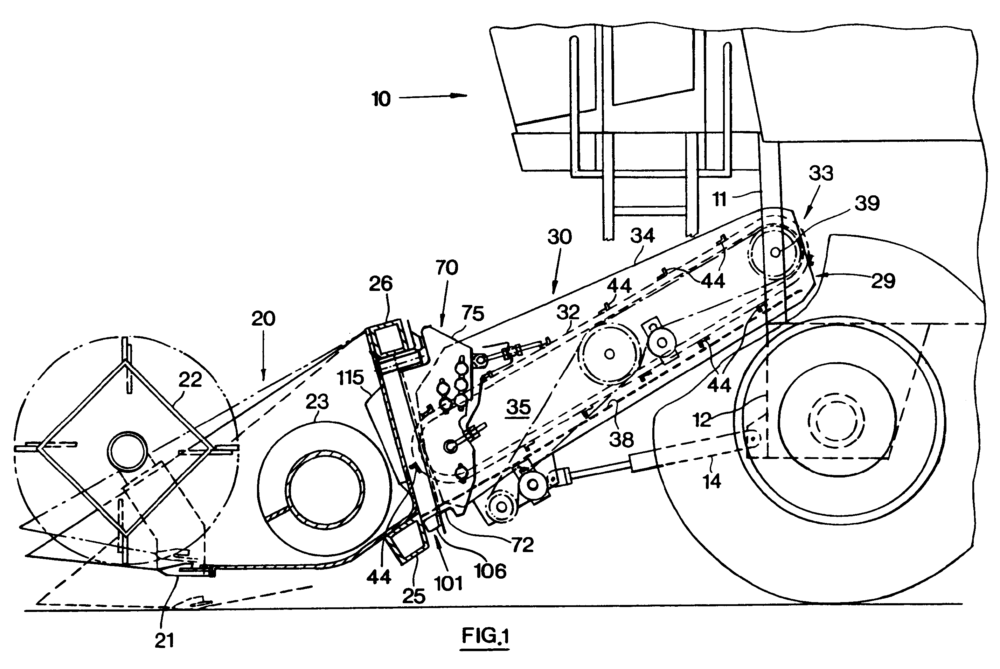

Referring now to the drawings and particularly to Figure 1, a schematic side elevational view, partially in cross section, of the forward portion of a crop harvesting machine 10, commonly referred to as self-propelled combine harvester, can be seen.

The combine base unit 11 is mobilely supported by a wheeled frame 12 for movement over a field to harvest crop material. Pivotally mounted to the front of the base unit 11 is a feeder house 30 on which is mounted a crop harvesting header 20. The combine base unit 11 and the header 20 are conventional and the former is only fragmentarily shown in Figure 1.

In general, the header 20 includes a forwardly disposed crop cutting means in the form of a reciprocating type mower 21 for severing crop material from the stubble. A reel 22 is disposed above and forwardly of the cutting means 21 to sweep crop material over the cutting means 21 and transport it rearwardly to consolidating means in the form of a consolidating auger 23. The consolidating auger 23 converges crop material towards a centrally disposed crop discharge opening 24 for discharge into the inlet end 31 of the feeder house 30 where the crop material is engaged by a crop elevator 32 of conventional construction and conveyed to the discharge end 33 of the feeder house 30 and fed into a conventional threshing and separating mechanism (not shown) supported in the base unit 11. The frame 25 of the header 20 includes a transversely disposed main header beam 26 which is used to support the header 20 from the feeder house 30.

Varying the angle of the cutting means 21 relative to the ground (as can be seen in phantom in Figure 1) on the one hand and lateral flotation of the header 20 relative to the base unit 11 for permitting this header 20 to adapt to transverse ground unevennesses, on the other hand, can be important to the efficiency of the crop gathering operation of the header 20 in connection with losses of crop material in different types of crops. To this end, the header 20 is supported on the feeder house 30 via a mounting assembly 70 which basically consists of a front face assembly 75, which is adjustable relative to the feeder house 30 to accomodate said cutting angle adjustability, and a cradle assembly 101 which is pivotally mounted on the front face assembly 75 to accomodate said lateral flotation.

As can be seen in Figure 1, the feeder house 30 includes a generally fore-and-aft extending, elongated body portion 34 defined by said rearward or discharge end 33 pivotally attached to the base unit 11 and said forward or inlet end 31 adjacent the header 20 for connection thereto. The body portion 34 includes a passageway 35 therethrough terminating in a crop inlet opening 37 at the forward end 31 and a crop discharge opening 29 at the discharge end 33 for allowing crop material to be transported rearwardly from said forward end 31 to said rearward end 33. The crop elevator or conveying means, normally in the form of an endless chain and slat apron conveyor 32, is positioned within the passageway 35 for transporting the crop material rearwardly. Generally, the apron conveyor 32 is driven by a drive shaft 39 positioned at the rearward end 33. A driven shaft (not shown) adjacent the forward end 31 supports guide wheels, idler sprockets or a drum 41 around which the endless apron conveyor 32 extends and which enables this conveyor 32 to rotate into an operative position for transporting crop material rearwardly.

The height of the header 20 relative to the ground is controlled by a pair of header lift hydraulic cylinders 14 interconnecting the feeder house 30 and the base unit 11. By extending the header lift cylinders 14 and pivoting the feeder house 30 about the drive shaft 39, the header 20 can be lifted from the ground.

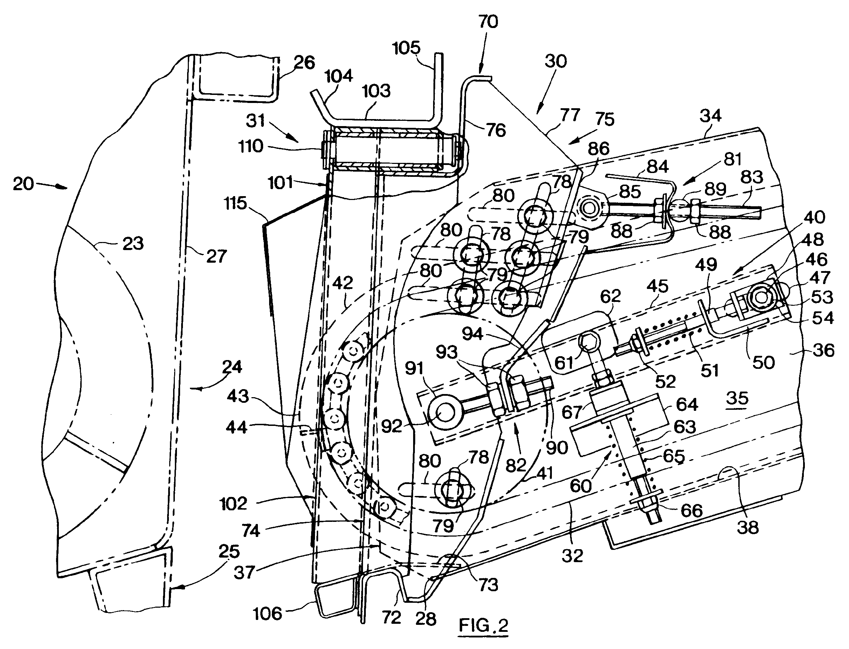

While the drive shaft 39 rotatably is mounted at a fixed position directly on the feeder house side walls 36, the driven shaft is mounted on the same side walls 36 via the intermediary of apron conveyor tensioning assemblies 40 including a.o. mounting arms 45 which can be seen in Figure 2 and which permit both generally fore-and-aft adjustment and generally up-and-down movement of said driven shaft. The mounting arms 45 are generally elongate in shape and are provided adjacent the inner sides of the feeder house side walls 36 and have bearings (not shown) generally at their forward ends for rotatably supporting the driven shaft. The arms 45 have rearward pivot pins 46 which extend outwardly through generally fore-and-aft oriented elongated slots 47 in the feeder house side walls 36 and which are supported, via angled brackets 48, on tension rods 49 disposed externally alongside the feeder house side walls 36. These tension rods 49, in turn, axially movably are received in mounting brackets 50 secured on said side walls 36. A tensioning spring in the form of a compression coil spring 51 extends around each tension rod 49 between the corresponding mounting bracket 50 and an adjustable stop 52 on said rod 49 and is disposed to urge the corresponding mounting arm 45 with the driven shaft mounted thereon, in a forward direction thereby taking up the slack of, and compensating for the wear in the apron conveyor 32.

Anyone skilled in the art will readily appreciate that, as the apron conveyor 32 wears and thus lengthens, the adjustable stops 52 on the tension rods 49 from time to time need some adjustment to maintain appropriate tension in the apron conveyor 32. It also will be appreciated that, as wear progresses, the positions of the driven shaft shifts in a forward direction whereby the forewardmost section 43 of the path 42 of the apron conveyor 32 is displaced in the same direction thus coming closer to the extreme forward end of the feeder house 30 and to the header auger 23.

The pivot pins 46 firmly may be connected to the corresponding feeder house side walls 36 by lock nuts 53 and appropriate washers 54 used to tightly fasten the angled brackets 48 to the corresponding feeder house side walls 36. It will be appreciated that, in case these fastening nuts 53 and washers 54 are used, the apron tensioning is not accomplished automatically in as much as these fastening nuts 53 and washers 54 need to be released and refastened from time to time.

The driven shaft not only is mounted for fore-and-aft adjustment within the feeder house 30, as described hereabove, but also in a manner permitting up-and-down flotational movement relative to the feeder house bottom wall 38. This is accomplished by providing, at each transverse side, a flotation assembly 60, each one of which comprises a mounting pin 61 secured to the corresponding mounting arm 45 (which equally is part of the flotation assembly 60) and extending outwardly through an appropriate aperture 62 in the corresponding feeder house side wall 36. A tension rod 63 is pivotally coupled to each one of these pins 61 and extends through an apertured bracket 64 secured to the corresponding feeder house side wall 36. A flotation spring in the form of a compression coil spring 65 extending around each tension rod 63 is supported, at one of its ends, on the corresponding apertured bracket 64 and abuts, at its opposite end, against an adjustable stop 66 on said tension rod 63. A further, resilient stop 67 also is provided on each tension rod 63 at the side of the corresponding apertured bracket 64 opposite to the side thereof against which the coil spring 65 abuts.

The arrangement is such that, when not in use, the coil springs 65 position the driven shaft at a minimum distance above the feeder house floor 38 with the resilient stop means 67 abutting against the corresponding apertured brackets 64. In use, the coil springs 65 permit the driven shaft and the forward portion 43 of the apron conveyor 32 to resiliently float away from the feeder house floor 38 when a thick crop layer passes through the gap between said floor 38 and the lower, operative strand of the apron conveyor 32 thus both accommodating the passage of this thick layer of crop material and improving the grip of the apron conveyor 32 thereon.

This particular mounting of the forward, driven shaft of the feeder mechanism is generally conventional in the art.

Referring to Figure 2, an enlarged view of the forward end 31, showing the mounting assembly 70 and a detached header 20 in phantom proximate thereto, can be seen. As already indicated the mounting assembly 70 basically consists of a front face assembly 75 and a cradle assembly 101 pivotally supported on the front face assembly 75.

The front face assembly 75 is a separate, generally rectangular structure defining an opening 74 therein which matches around the inlet opening 37 of the feeder house forward end 31 to which it adjustably is connected. This assembly 75 includes an uper offset section in the form of a generally L-shaped, transverse beam 76 which is substantially registrable with the main header beam 26 for supporting the header 20 in a detachable, operable position.

The front face assembly 75 further also includes transversely opposite side sheets 77 which project rearwardly in close proximity to the feeder house side walls 36 and which include a plurality of generally upright, elongated apertures 78 which, as seen in side view, overlap generally fore-and-aft extending, elongated apertures 80 in the feeder house side walls 36. Bolts 79, interfitting corresponding apertures 78 and 80 at their intersections, serve to restrict and control the extent of movement of the front face assembly 75 and to act as a stabilizing means.

In addition to the bolts 79 for securing the front face assembly 75 to the feeder house body portion 34 upper and lower adjustment assemblies 81, 82 also are provided at the transversely opposite sides of the feeder house 30 between the side sheets 77 and the feeder house side walls 36. These assemblies 81, 82 comprise screwed rods 83, 90 which, at one end, pivotally are attached to the corresponding side sheets 77 and adjustably extend through and are connected, along their length, to apertured supports 84, 94 on the corresponding feeder house side walls 36.

Each upper screwed rod 83 is pivotally connected, at said one end thereof, to a lug 85 welded to a flanged portion 86 of the corresponding side sheet 77 and is connected to said corresponding support 84 via the intermediary of a pair of adjustment nuts 88 on the rod 83 at opposite sides of said support 84. A spherical member 89, slid on the upper rod 83, is interposed beween the rearwardmost one of the nuts 88 and the support 84 which is curved in shape to seat said spherical member 89.

Each lower screwed rod 90 is pivotally coupled at its forward end to the corresponding side sheet 77 of the front face assembly 75 via a bushing 91 which fits on a mounting pin 92 extending transversely outwardly from said side sheet 77. Adjustment nuts 93 are provided on each rod 90 at opposite sides of the corresponding support 94 which is in the form of a flange welded to the corresponding feeder house side wall 36 and through which said screwed rod 90 adjustably extends.

The front face assembly 75 finally also comprises a lower transverse beam 72 which completes the rectangular shape thereof and which is in the form of a generally upside-down, generally U-shaped profile positioned generally at the level and forwardly of the intake edge 28 of the feeder bottom wall 38. This lower transverse beam 72 is positioned generally at the level of the feeder house floor 38 and, in as much as, in use, crop material passes thereacross into the gap between the apron conveyor 32 and the floor 38 and furthermore, as the front face assembly 75 is both angularly and fore-and-aft adjustable relative to the body portion 34 of the feeder house 30, a resilient sealing plate 73 has been provided which, at one edge, is coupled to said lower beam 72 and which adjustably overlaps the forward or intake edge 28 of the feeder bottom wall 38 in resilient, sealing engagement therewith; the arrangement being such that this sealing plate 73 does not interfere with the adjustablility of the front face assembly 75.

So far the front face assembly 75 according to the invention has been described and anyone skilled in the art will understand that, in case lateral flotation is not required, the header 20 detachably can be connected directly to this front face assembly 75. However, usually lateral flotation also will be required and thus, the mounting assembly 70 necessarily also will comprise a cradle assembly 101 which pivotally is mounted on the front face assembly 75.

The separate cradle assembly 101 is pivotally affixed to the front face assembly 75 for rotation in front of said front face assembly 75 about the direction of travel. In the preferred embodiment, the cradle assemby 101 is pivotally affixed to the center of the transverse L-shaped beam 76 of the front face assembly 75 by a pivot means 110.

The cradle assembly 101 includes a crop passage opening 102 which is registrable with the header discharge opening 24 and further also generally matches with the opening 74 in the front face assembly 75. The cradle assembly 101 also includes a nesting portion 103 which overlaps the offset section or L-shape of the upper beam 76 of the front face assembly 75 for receiving and attaching the main header beam 26. The nesting portion 103 has a preferred, substantially U-shaped configuration with the forward leg 104 being shorter than the rear leg 105 and bent forwardly for facilitating the connection between the main header beam 26 and the nesting portion 103. To either side of the pivot 110, locking means (not shown) are provided to lock the beam 26 into an operative position wherein th crop discharge opening 24, the crop passage openings 102 and 74 and the crop inlet opening 37 are substantially aligned.

A latch mechanism (also not shown) locks the lower end 106 of the cradle assembly 101 to the corresponding portion of the header 20 to further aid in retaining the header 20 in an operative position relative to the cradle assembly 101 and the feeder house body portion 34.

To control the pivotal movement of the cradle assembly 101 and thus also the header 20 about the pivot 110, a pivot control means (not shown) may be provided between the cradle assembly 101 and the front face assembly 75. As, in use, the cradle assemby 101 is rotated, the crop passage opening 102 therethrough becomes slightly askewed to the opening 74 in the front face assembly 75 and the crop inlet opening 37 at the beginning of the feeder house passageway 35. However, as the maximum pivotal movement of the cradle assembly 101 is limited, this does not present a problem to the crop flow from the header 20 to the feeder house body portion 34. Details of a pivot control means for the cradle assembly 101 may be found in EP-A-0.243.530 to which reference is made.

The cradle assembly 101 also includes a forwardly projecting crop retention hood 115 which overlaps the forwardmost portion 43 if the apron conveyor path 42 and which, when a header 20 is mounted on the feeder house 30, extends into the discharge opening 24 of this header 20 and into the vicinity of the header auger 23 to retain crop material within the feeder house passageway 35.

To keep the cradle assembly 101 from separating from the front face assembly 75, particularly at the lower portion 106 thereof, the cradle assembly 101 includes retaining means (equally not shown) which interact between the lower portion 106 of the cradle assembly 101 and the front face of the front face assembly 75 without however interferring with the pivotal movement of the cradle assembly 101 relative to the front face assembly 75.

By providing a combine with a combined header mounting assembly 70 including both a lateral float mechanism in the form of the cradle assembly 101 and a front face assembly 75 which both is generally fore-and-aft adjustable relative to the feeder house body portion 34 and pivotable relative to said body portion 34 around a transverse pivot axis, one skilled in the art should readily realize that a very flexible header mounting combination is obtained.

Anyone skilled in the art will understand from a reading of the foregoing description that, after untightening the bolts 79; adjustment of the nuts 88, 93 on the screwed rods 83, 90 in the one or other direction results in a generally fore-and-aft adjustment of the front face assembly 75 (and thus also of the header 20 mounted or to be mounted thereon) relative to the inlet end 31 of the feeder house body portion 34. This thus permits to accurately position, respectively reposition the mounting assembly 70 and thus also the header 20 and more particularly the header auger 23 relative to the forwardmost position 43 of the path 42 of the conveyor slats 44 on the apron conveyor 32. This is advantageous to the extent that thereby the spacing between this forwardmost portion 43 of said path 42 and the header auger 23 accurately can be controlled and thus kept at a minimum in as much as fore-and-aft adjustment of the front face assembly 75 is easily made when wear of the apron conveyor 32 results in a displacement of the driven shaft in the forward direction. Maintaining this minimum spacing between the header auger 23 and the apron conveyor 32 is favourable with respect to the proper crop transfer function between these components.

This arrangement also obviates the need to shorten the apron conveyor chains with one or two links when these chains have lengthened as a result of wear and which is the conventional approach to avoid interference of the apron conveyor 32 with other parts such as e.g. the auger 23 when wear results in the forward shaft being displaced too far to the front. As is generally known to anyone skilled in the art, this conventional approach very much restricts the possibility for accurately controlling the spacing beween the header auger 23 and the apron conveyor 32, i.e. this spacing often either is too small or too big while that the ideal spacing cannot be obtained by means of varying the number of links of the conveyor chains.

Shortening the apron conveyor chains by taking out one or more links furthermore even is totally unacceptable in case the apron conveyor 32 has to cooperate with a toothed stone deflector drum (not shown) which may be installed within the envelope of said conveyor 32 inside the feeder house body portion 34 in a manner so that the teeth thereof extend from within said envelope through the gaps inbetween adjacent apron slats 44, to the space between the lower strand of the apron conveyor 32 and the feeder house floor 38. In other words, the teeth of such a stone deflector drum may be arranged to intermesh with the slats 44 of the apron conveyor 32 and this implies that all slats 44 are equidistantly spaced apart along the length of the conveyor chains as otherwise this deflector drum and the conveyor slats 44 would foul each other. Taking out one or a few links from the conveyor chains would result in the slats 44 no longer being equidistantly spaced apart around the circumference of the apron conveyor 32.

The above described stone deflector drum normally is combined with a spring loaded stone trap door in the feeder house floor 38. However, neither one of these components is shown in Figures 1 and 2 in as much as they really do not form part of the present invention on the one hand and similar stone trap components generally belong to the state of the art as disclosed a.o. in US-A-3.971.390 on the other hand.

The arrangement described also permits to maintain adequate tension in the apron conveyor 32 without having to fear that the forward shaft will be displaced too far to the front (which, as already said, would result in the apron conveyor 32 fouling certain other machine parts such as the header auger 23). This adequate apron tension, in turn, prevents said apron from jumping over any teeth of the drive sprockets on the drive shaft 39.

The arrangement described so far also is advantageous when different headers have to be mounted on the feeder house 30 in as much as it is conceivable that, different headers may have different geometric configurations and more specifically, that in different headers the header auger may be spaced further away from, respectively positioned closer to the header rear wall 27 and the discharge opening 24 therein. Indeed, wide headers often require a larger spacing between the header rear wall 27 and the header auger 23 than narrow or small headers. Yet, the spacing between the header auger 23 and the apron conveyor 32 in the feeder house 30 preferably always should be minimal irrespective of the header size to guarantee a smooth transfer of the crop material from the header 20 to the feeder house 30. It thus will be appreciated that the adjustability provided by the front face assembly 75 described hereabove also provides the desired flexibility for perfectly adapting the feeder house 30 to different headers 20 having different header frame-header auger configurations.

The front faced assembly 75 described so far also enables easy adjustment of the cutting angle of the header 20. Indeed, adjustment of only the upper screwed rods 83 relative to the supports 84 results in a tilting of the front face assembly 75 and thus also of the header 20 about the pivot points 92 of the lower adjustment assemblies 82.

In this connection it should be noticed that the pivot pins 92 are positioned on the side sheets 77 generally in alignment witht the forward, driven shaft of the feeder house 30 and when ignoring the limited adjustability of this shaft. This is why said driven shaft is not visible in the drawings. It further also will be appreciated that this is advantageous for keeping the clearance between the header auger 23 and the apron conveyor 32 generally constant during said cutting angle adjustment.

After the desired fore-and-aft adjustment of the front face assembly 75, respectively the cutting angle adjustment is completed, the bolts 79 are tightened to firmly hold the front face assembly 75 and the header 20 in the selected position and thus to stabilize the feeder house and header combination.

While the preferred structure, in which the principles of the present invention have been incorporated, is described above and is shown in the accompaying Figures 1 and 2, it is to be understood that the invention is not to be limited to the particular details as described above and shown in said Figures, but that, in fact, widely different means may be employed in the practice of the broader aspects of the invention.

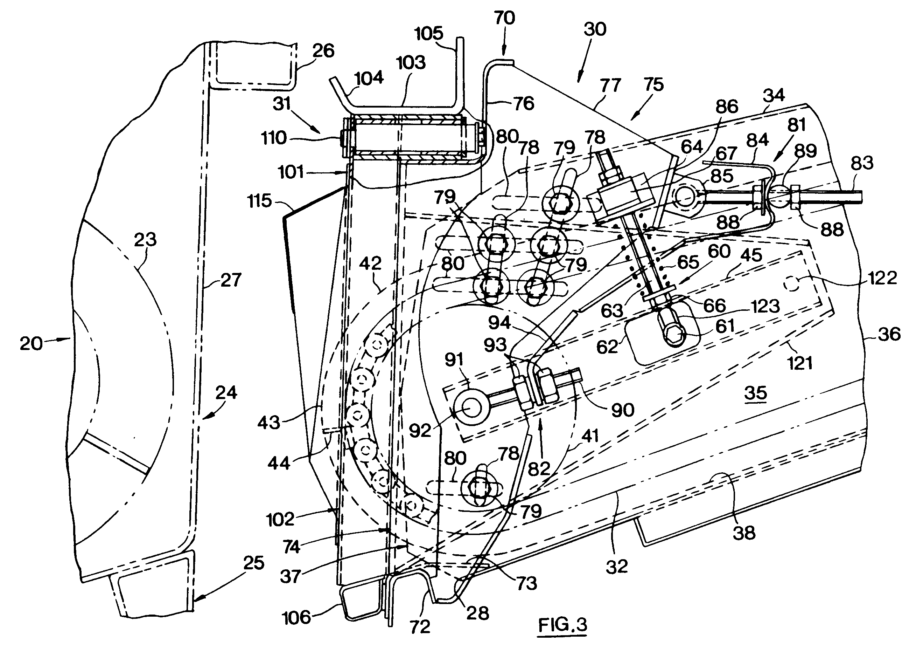

With reference to Figure 3, one such alternative embodiment of the present invention now will be described. The basic difference, when compared with the preferred embodiment shown in Figure 2, is that, in the alternative arrangement according to Figure 3, the forward or driven feeder shaft is mounted in a manner to be fore-and-aft adjustable in unison with the front face assembly 75. To this end, the front face assembly 75 additionally is provided with transversely spaced apart flanges 121 which extend rearwardly from the forward face of the front face assembly 75 within the passageway 35 of the feeder house body portion 34 and closely alongside the side walls 36 thereof. In other words, each additional flange 121 extends parallel to the corresponding side sheet 77 at a small distance inwardly therefrom and in a manner so as to receive the corresponding body portion side wall 36 therebetween when the front face assembly is mounted in an operative position on the feeder house body portion 34.

Pivot pins 122 extend transversely inwardly from the flanges 121 adjacent the rearward ends thereof and pivotally support the mounting arms 45 which, as in the preferred embodiment rotatably sypport the forward feeder shaft at their forward ends.

In as much as the arms 45 are pivotally mounted on the fore-and-aft adjustable front face assembly 75, the tension rods 49 and related parts from the preferred embodiment no longer are needed.

However, as in the preferred embodiment, the driven feeder shaft in this alternative embodiment also is mounted for up-and-down flotational movement. To this end, the mounting pins 61 of the flotation assemblies 60 extend transversely outwardly through generally upright and elongated apertures 123 in the additional flanges 121 and through the generally rectangularly shaped apertures 62 in the body portion side walls 36. The flotation assemblies 60 of this alternative arrangement are very similar to the flotation assemblies 60 of the preferred embodiment with the only major difference being that, in the alternative arrangement, these assemblies resiliently support on the side sheets 77 of the front face assembly 75 rather than on the feeder house side walls 36.

It also will be noticed from Figure 3 that, in the alternative embodiment, the flotation assemblies 60 have been turned around through 180° when compared with the arrangement of the preferred embodiment. However, this merely is a matter of convenience and has no functional importance. The only thing which matters is that the flotation assemblies 60 resiliently support on the front face assembly 75 rather than on the feeder house body portion 34.

To facilitate this, the side sheets 77 have been extended rearwardly to accomodate the supports 64 thereon and, as a consequence, the upper adjustment assemblies 82 also have been displaced somewhat to the rear. However, again this is of no principal importance.

One skilled in the art readily will understand that, in the alternative arrangement according to Figure 3, the forward portion 43 of the conveyor path 42 always is at the same relative position to the crop retention hood 115 and it will be appreciated that preferably the spacing therebween is minimal. Also, when the apron conveyor 32 lengthens as a result of wear, the front face assembly 75 is shifted in the forward direction to take up the slack arisen in the apron conveyor 32 because of this wear.

In summary, the alternative arrangement according to Figure 3, basically has the same advantages as the preferred embodiment according to Figure 2, except that this alternative embodiment does not permit adaptation to headers with different auger-rear wall configurations. Apart therefrom and as an example only, the alternative embodiment also permits easy cutting angle adjustment by tilting the front face assembly 75 around the mouting pins 92. On top of all this, the alternative embodiment also has the additional advantage of the further increased simplicity which results from the fact that the front feeder shaft is supported on the front face assembly 75 whereby both components are adjusted in unison.

## Claims

1. A feeder house (30) adapted for detachably mounting a crop harvesting header (20) on a mobile combine harvester base unit (11) and including :
- an elongated body portion (34) defining a passageway (35) terminating, at opposite ends, in crop inlet and discharge openings (37, 29) and being connectable, generally at said discharge opening (29), to a base unit (11) and, in use, having its inlet opening (37) positioned adjacent a header (20) supported by the feeder house (30) on said base unit (11);
- crop conveying means (32) housed within the passageway (35) for, in use, transporting crop material from the header (20) longitudinally through said passageway (35) to the base unit (11);
- a front face assembly (75) pivotally movably attached to the body portion (34) generally adjacent the inlet opening (37) thereof for selective pivotal adjustment relative thereto around a transverse pivot axis (92); said front face assembly (75) including header connecting means (101, 103) for attaching the header (20) thereto in a forwardly projecting position and having a crop passage opening (74) therethrough substantially registered with the body portion crop inlet opening (37) and generally registrable with a crop discharge opening (24) in the header (20); and
- locking means (79) for fixedly securing the front face assembly (75) in any selected adjustment position relative to the feeder house body portion (34); and
characterized in that
the pivotal mounting (92) of the front face assembly (75) additionally also is generally longitudinally adjustable relative to the feeder house body portion (34).

2. A feeder house (30) according to claim 1 characterized in that :
- the feeder house body portion (34) comprises transversly opposite side walls (36);
- the front face assembly (75) includes transversely opposite side sheets (77) extending rearwardly alongside the side walls (36); and
- first and further adjustment means adjustably interconnect the front face assembly (75) and the body portion (34); the first adjustment means including a pair of transversely spaced apart first adjustment assemblies (82) of which each one is pivotally connected to one side sheet (77) of the front face assembly (75) and adjustably supported on the corresponding body portion side wall (36); the arrangement being such that the pivotal connections (92) of said first adjustment assemblies (82) with the front face assembly (75) are transversely aligned with respect to each other and determine the pivot axis around which the front face assembly (75) pivots upon operation of the further adjustment means.

3. A feeder house (30) according to claim 2 characterized in that the further adjustment means also include a pair of transversely spaced apart further adjustment assemblies (81) of which each one is pivotally connected to one side sheet (77) of the front face assembly (75) at a distance from the pivotal connection (92) of the corresponding first adjustment assembly (82) and adjustably supported on the corresponding body portion side wall (36) again at a distance from the connection (93, 94) of the corresponding first adjustment assembly (82) to said side wall (36).

4. A feeder house (30) according to claim 3 characterized in that each first and further adjustment assembly (82, 81) comprises :
- a screwed rod (90, 83) pivotally attached at one end to the corresponding side sheet (77) of the front face assembly (75) and adjustably received, along its length, in an apertured support (94, 84) on the corresponding side wall (36) of the feeder house body portion (34); and
- adjustment nuts (93, 88) adjustably provided on said rod (90, 83) at opposite sides of said corresponding support (94, 84).

5. A feeder house (30) according to claim 4 characterized in that the screwed rod (90) of each first adjustment assembly (82) is attached at said one end to a bushing (91) which pivotally is received on a transverse mounting pin (92) on the corresponding side sheet (77) of the front face assembly (75).

6. A feeder house (30) according to claim 4 or 5 characterized in that the apertured support (84) associated with each one of said further adjustment assemblies (81) is curved in shape with the hollow side thereof facing away from the front face assembly (75) and receives, in said hollow side, a spherical member (89) slid on the associated screwed rod (83) between this hollow side of said support (84) and the adjacent adjustment nut (88).

7. A feeder house (30) according to any of the claims 2 to 6 characterized in that the locking means comprise :
- fixation holes (80) provided in each feeder house side wall (36);
- fixation apertures (79) provided in each side sheet (77) of the front face assembly (75); said fixation apertures (79) in the side sheets (77) being registrable with fixation holes (80) in the corresponding side walls (36); and
- bolts (79) insertable in corresponding holes (80) and apertures (79) to selectively lock the front face assembly (75) into one of a Plurality of alternate pivoted and/or longitudinally adjusted positions.

8. A feeder house (30) according to claim 7 characterized in that :
- the fixation holes (80) and the fixation apertures (79) are formed by elongated slots provided in said feeder house side walls (36), respectively said side sheets (77) of the front face assembly (75) and which intersect each other as seen in side view; and
- the fixation bolts (79) are insertable at the intersections of said elongated slots in respectively the feeder house side walls (36) and the corresponding side sheets (77) of the front face assembly (75).

9. A feeder house (30) according to any of the preceding claims characterized in that :
- the front face assembly (75) comprises a lower transverse beam (72) delimiting, in part, the crop passage opening (74) in said assembly (75); said beam (72) being positioned generally at the level of the intake edge (28) of the feeder house floor (38); and
- a resilient sealing plate member (73), attached to said beam (72), extends therefrom in ovelapping fashion with said intake edge (28) in a manner to permit generally longitudinal and/or pivotal adjustment of the front face assembly (75) relative to the feeder house body portion (34).

10. A feeder house (30) according to any of the claims 2 to 9 characterized in that :
- the crop conveying means comprise an endless apron conveyor (32) extending within the passageway (35) of the feeder house body portion (34) around a drive shaft (39) adjacent the outlet opening (29) and a driven shaft adjacent the inlet opening (37);
- the pivot axis (92) of the front face assembly (75) on the feeder house body portion (34) extends either generally coaxially with or generally parallel to and in the vicinity of said driven shaft; and
- the further adjustment means (81) extend between the front face assembly (75) and the feeder house body portion (34) at a distance above said driven shaft.

11. A feeder house (30) according to claim 10 characterized in that the driven shaft rotatably is mounted within the feeder house body portion (34) via the intermediary of a pair of transversely spaced apart flotation assemblies (60); each said assembly (60) comprising :
- a generally elongated mounting arm (45) extending generally longitudinally of and within the feeder house body portion (34) and rotatably supporting adjacent one end proximate to the body portion inlet opening (37) said driven shaft and pivotally being supported, adjacent its other end remote from said inlet opening (37), on the corresponding side wall (36) of the feeder house body portion (34); and
- resilient means (65) extending between each mounting arm (45) and the corresponding side wall (36) of the feeder house body portion (34) for urging the driven shaft towards a position at a minimum distance from the feeder house floor (38) and for, in use, permitting this driven shaft to resiliently move away from said floor (38).

12. A feeder house (30) according to claim 11 characterized in that the pivotal mounting of each mounting arm (45) on the corresponding feeder house side wall (36) is adjustable generally longitudinally of the feeder house body portion (34) and the front face assembly (75) supported thereon.

13. A feeder house (30) according to claim 12 characterized in that each mounting arm (45) is pivotally mounted on the corresponding feeder house side walls (36) via the intermediary of an apron conveyor tensioning assembly (40) including :
- a screwed tensioning member (49) pivotally supporting, at one end, said arm (45) and adjustably received, along its length, in an apertured support (50) on the corresponding feeder house side wall (36); and
- resilient means (51) extending between said support (50) and an adjustable stop (52) on the screwed tensioning member (49); the arrangement being such that the resilient means (51) urge the corresponding mounting arm (45) in the direction towards the inlet opening (37) in the feeder house body portion (34).

14. A feeder house (30) according to claim 10 characterized in that :
a) the side sheets (77) of the front face assembly (75) are positioned outside the feeder house body portion (34) alongside the side walls (36) thereof;
b) the front face assembly (75) also includes a pair of transversely spaced apart, additional flanges (121) which extend rearwardly into the passageway (35) of the feeder house body portion (34) alongside the opposite side walls (36) thereof; and
c) the driven shaft rotatably is mounted within the feeder house body portion (34) adjacent the inlet opening (37) thereof via the intermediary of a pair of transversely spaced apart flotation assemblies (60); each said flotation assembly (60) comprising :
- a generally elongated mounting arm (45) extending generally longitudinally of and within the feeder house body portion (34) and rotatably supporting adjacent one end proximate to the body portion inlet opening (37) said driven shaft and pivotally being supported, adjacent its other end remote from said inlet opening (37), on the corresponding additional flange (121) of the front face assembly (75); the arrangement being such that the driven shaft is generally longitudinally adjustable relative to the feeder house body portion (34) in unison with the front face assembly (75); and
- resilient means (65) extend beween each mounting arm (45) and the corresponding side sheet (77) of the front face assembly (75) for urging the driven shaft towards a position at a minimum distance from the feeder house floor (38) and for, in use, permitting this driven shaft to resiliently move away from said floor (38).

15. A feeder house (30) according to claim 14 characterized in that :
- each resilient means (65) is connected to a corresponding mounting arm (45) via a mounting pin (61) secured to said arm (45) and extending transversely outwardly therefrom through corresponding apertures (123, 62) in the correponding additional flange (121) and the corresponding feeder house side wall (36); and
- said resilient means (65) extend between said pin (61) and a support (64) on the corresponding side sheet (77) of the front face assembly (75) at a location outside the feeder house body portion (34) and alongside the corresponding side wall (36) thereof.

16. A feeder house (30) according to any of the preceding claims characterized in that the header connecting means include a cradle assembly (101) having pivot means (110) pivotally attaching said cradle assembly (101) to the front face assembly (75) for pivotal movement in a substantially vertical transverse plane; said cradle assembly (101) having a crop passage opening (102) therethrough substantially registered with the crop passage opening (74) in the front face assembly (75) and generally registrable with the crop discharge opening (24) in a header (20) and said cradle assembly (101) also comprising header connecting means (103) for attaching a header (20) thereto to prevent relative movement therebetween.

17. A feeder house (30) according to any of the claims 10 to 15, respectively claim 16 when appended to any of said claims 10 to 15 characterized in that the forwardmost portion (43) of the path (42) of the endless apron conveyor (32) projects from within the feeder house passage way (35), through the crop passage opening (74) in the front face assembly (75), respectively the crop passage openings (74, 102) in the front face assembly (75) and the cradle assembly (101), into the vicinity of the crop discharge opening ( 24) of a header (20) when the latter is attached to the feeder house (30).

## Patentansprüche

1. Schrägförderergehäuse (30) zur lösbaren Befestigung eines Ernte-Schneidwerks oder Erntevorsatzgerätes (20) an einer fahrbaren Mähdrescher-Grundeinheit (11), mit:
- einem langgestreckten Hauptteil (34), der einen an entgegengesetzten Enden in Erntematerialeinlaß- und -auslaßöffnungen (37, 29) endenden Kanal (35) umgrenzt und allgemein an der Auslaßöffnung (29) mit einer Grundeinheit (11) verbindbar ist und im Betrieb mit seiner Einlaßöffnung (37) benachbart zu einem Schneidwerk oder Erntevorsatzgerät (20) angeordnet ist, das von dem Schrägförderergehäuse (30) an der Grundeinheit (11) gehaltert ist,
- in dem Kanal (35) angeordneten Erntematerial-Fördereinrichtungen (32), die im Betrieb Erntematerial von dem Schneidwerk oder Vorsatzgerät (29) in Längsrichtung durch den Kanal zur Grundeinheit (11) transportieren,
- einer Vorderflächenbaugruppe (75), die schwenkbar beweglich an dem Hauptteil (34) allgemein benachbart zu dessen Einlaßöffnung (37) für eine selektive Schwenkeinstellung gegenüber dem Hauptteil um eine querverlaufende Schwenkachse (92) befestigt ist, wobei die Vorderflächenbaugruppe (75) Schneidwerk- oder Vorsatzgeräte-Verbindungseinrichtungen (101, 103) zur Befestigung des Schneidwerkes oder Vorsatzgerätes (20) an dieser in einer nach vorne hin vorspringenden Position einschließt und eine Erntematerial-Durchlaßöffnung (74) aufweist, die im wesentlichen mit der Erntematerial-Einlaßöffnung (37) des Hauptteils ausgerichtet und allgemein mit einer Erntematerial-Auslaßöffnung (24) in dem Schneidwerk oder Vorsatzgerät (20) ausrichtbar ist, und
- Verriegelungseinrichtungen (79) zur starren Festlegung der Vorderflächenbaugruppe (75) in irgendeiner ausgewählten Einstellposition gegenüber dem Hauptteil (34) des Schrägförderergehäuses,
dadurch gekennzeichnet, daß
die Schwenkbefestigung (92) der Vorderflächenbaugruppe (75) zusätzlich noch allgemein in Längsrichtung gegenüber dem Hauptteil (34) des Schrägförderergehäuses einstellbar ist.

2. Schrägförderergehäuse (30) nach Anspruch 1,
dadurch gekennzeichnet, daß:
- der Hauptteil (34) des Schrägförderergehäuses in Querrichtung gegenüberliegende Seitenwände (36) umfaßt,
- die Vorderflächenbaugruppe (75) in Querrichtung gegenüberliegende Seitenplatten (77) einschließt, die sich entlang der Seitenwände (36) nach hinten erstrecken, und
- erste und weitere Einstelleinrichtungen die Vorderflächenbaugruppe und den Hauptteil (34) miteinander verbinden, wobei die ersten Einstelleinrichtungen zwei mit Querabstand angeordnete erste Einstellbaugruppen (82) einschließen, von denen jede schwenkbar mit einer Seitenplatte (77) der Vorderflächenbaugruppe (75) verbunden ist und einstellbar auf der entsprechenden Seitenwand (36) des Hauptteils gehaltert ist, wobei die Anordnung derart ist, daß die Schwenkverbindungen (92) der ersten Einstellbaugruppen (82) mit der Vorderflächenbaugruppe (75) in Querrichtung miteinander ausgerichtet sind und die Schwenkachse bestimmen, um die die Vorderflächenbaugruppe (75) bei einer Betätigung der weiteren Einstelleinrichtungen verschwenkt.

3. Schrägförderergehäuse (30) nach Anspruch 2,
dadurch gekennzeichnet, daß die weiteren Einstelleinrichtungen weiterhin zwei mit Querabstand angeordnete weitere Einstellbaugruppen (81) einschließen, die jeweils schwenkbar mit einer jeweiligen Seitenplatte 70 der Vorderflächenbaugruppe (75) in einem Abstand von der Schwenkverbindung (92) der entsprechenden ersten Einstellbaugruppe (82) verbunden sind und einstellbar auf der entsprechenden Seitenwand (36) des Hauptteils wiederum in einem Abstand von der Verbindung (93, 94) der entsprechenden ersten Einstellbaugruppe (82) mit der Seitenwand (36) gehaltert ist.

4. Schrägförderergehäuse (30) nach Anspruch 3,
dadurch gekennzeichnet, daß jede erste und weitere Einstellbaugruppe (82, 81) folgende Teile umfaßt:
- eine Gewindestange (90, 93), die schwenkbar mit einem Ende an der entsprechenden Seitenplatte (77) der Vorderflächenbaugruppe (75) befestigt und einstellbar entlang ihrer Länge in einer mit einer Öffnung versehenenen Halterung (94, 84) an der entsprechenden Seitenwand (36) des Hauptteils (34) des Schrägförderergehäuses aufgenommen wird, und
- Einstellmuttern (93, 88), die in einstellbarer Weise auf der Gewindestange (90, 83) auf entgegengesetzten Seiten der entsprechenden Halterung (94, 84) vorgesehen sind.

5. Schrägförderergehäuse (30) nach Anspruch 4,
dadurch gekennzeichnet, daß die Gewindestange (90) jeder ersten Einstellbaugruppe (82) mit einem Ende an einer Büchse (91) befestigt ist, die schwenkbar von einem querverlaufenden Befestigungszapfen (92) auf der entsprechenden Seitenplatte (77) der Vorderflächenbaugruppe (75) aufgenommen wird.

6. Schrägförderergehäuse (30) nach Anspruch 4 oder 5,
dadurch gekennzeichnet, daß die mit einer Öffnung versehene Halterung (94), die jeder der weiteren Einstellbaugruppen (81) zugeordnet ist, eine gekrümmte Form aufweist, wobei die konkave Seite von der Vorderflächenbaugruppe (75) fort gerichtet ist und in dieser konkaven Seite ein sphärisches Bauteil (89) aufnimmt, das auf die zugehörige Gewindestange (63) zwischen dieser konkaven Seite der Halterung und der benachbarten Einstellmutter (88) aufgeschoben ist.

7. Schrägförderergehäuse (30) nach einem der Ansprüche 2-6,
dadurch gekennzeichnet, daß die Verriegelungseinrichtungen folgende Teile umfassen:
- in jeder Seitenwand (36) des Schrägförderergehäuses vorgesehene Befestigungslöcher (80),
- in jeder Seitenplatte (77) der Vorderflächenbaugruppe (75) vorgesehene Befestigungsöffnungen (79), wobei die Befestigungsöffnungen (79) in den Seitenplatten (77) mit den Befestigungslöchern (80) in den entsprechenden Seitenwänden (36) ausrichtbar sind, und
- in die entsprechenden Löcher (80) und Öffnungen (79) einsetzbare Schrauben (79) zur selektiven Verriegelung der Vorderflächenbaugruppe (75) in einer einer Vielzahl von abwechselnden verschwenkten und/oder in Längsrichtung eingestellten Positionen.

8. Schrägförderergehäuse (30) nach Anspruch 7,
dadurch gekennzeichnet, daß:
- die Befestigungslöcher (80) und die Befestigungsöffnungen (79) durch langgestreckte Schlitze in den Schrägförderergehäuse-Seitenwänden (369 bzw. den Seitenplatten (77) der Vorderflächenbaugruppe (75) gebildet sind, die bei Betrachtung in Seitenansicht einander schneiden, und
- die Befestigungsbolzen (79) an den Schnittpunkten der langgestreckten Schlitze in den Schrägförderergehäuse-Seitenwänden (36) bzw. den entsprechenden Seitenplatten (77) der Vorderflächenbaugruppe (75) einsetzbar sind.

9. Schrägförderergehäuse (30) nach einem der vorhergehenden Ansprüche,
dadurch gekennzeichnet, daß
- die Vorderflächenbaugruppe (75) einen unteren Querträger (72) umfaßt, der teilweise die Erntematerial-Durchlaßöffnung (74) in dieser Baugruppe (75) begrenzt, wobei der Träger (72) allgemein in der Höhenlage der Einlaßkante (28) des Schrägförderergehäuse-Bodens (38) angeordnet ist, und
- ein elastisches Dichtungsplattenbauteil (73) an dem Träger (72) befestigt ist und sich von diesem in überlappender Beziehung mit der Einlaßkante (28) derart erstreckt, daß eine allgemein längsgerichtete und/oder Schwenk-Einstellung der Vorderflächenbaugruppe (75) gegenüber dem Schrägförderergehäuse-Hauptteil (34) möglich ist.

10. Schrägförderergehäuse (30) nach einem der Ansprüche 2-9,
dadurch gekennzeichnet, daß:
- die Erntematerial-Fördereinrichtungen einen endlosen Umschlingungsförderer (32) umfassen, der sich in dem Kanal (35) des Hauptteils (34) des Schrägförderergehäuses um eine Antriebswelle (39) benachbart zur Auslaßöffnung (92) und eine angetriebene Welle benachbart zur Einlaßöffnung (37) erstreckt,
- die Schwenkachse (92) der Vorderflächenbaugruppe (75) auf dem Hauptteil (34) des Schrägförderergehäuses sich entweder allgemein koaxial zu oder allgemein parallel zu und in der Nähe der angetriebenen Welle erstreckt, und
- die weiteren Einstelleinrichtungen (81) sich zwischen der Vorderflächenbaugruppe (75) und dem Hauptteil (34) des Schrägförderergehäuses in einem Abstand oberhalb der angetriebenen Welle erstrecken.

11. Schrägförderergehäuse (30) nach Anspruch 10,
dadurch gekennzeichnet, daß die angetriebene Welle drehbar in dem Hauptteil (34) des Schrägförderergehäuses über zwei mit Querabstand angeordnete Schwimmbaugruppen (60) befestigt ist, wobei jede Baugruppe (60) folgende Teile umfaßt:
- einen allgemein langgestreckten Befestigungsarm (45), der sich allgemein in Längsrichtung des Schrägförderergehäuse-Hauptteils (34) und in diesem erstreckt und benachbart zu einem Ende in der Nähe der Einlaßöffnung (37) des Hauptteils die angetriebene Welle drehbar lagert, während er benachbart zu seinem anderen Ende und von der Einlaßöffnung (37) entfernt an der entsprechenden Seitenwand (36) des Schrägförderergehäuse-Hauptteils (34) schwenkbar befestigt ist, und
- elastische Einrichtungen (65), die sich zwischen jedem Befestigungsarm (45) und der entsprechenden Seitenwand (36) des Schrgförderergehäuse-Hauptteils (34) erstrecken, um die angetriebene Welle in Richtung auf eine Position in einem minimalen Abstand von dem Schrägförderergehäuse-Boden (38) zu drücken und um es im Betrieb dieser angetriebenen Welle zu ermöglichen, sich elastisch von dem Boden (38) fort zu bewegen.

12. Schrägförderergehäuse (30) nach Anspruch 11,
dadurch gekennzeichnet, daß die Schwenkbefestigung jedes Befestigungsarms (45) auf der entsprechenden Schrägförderergehäuse-Seitenwand (36) allgemein in Längsrichtung des Schrägförderergehäuse-Hauptteils (34) und der daran gehalterten Vorderflächenbaugruppe (75) einstellbar ist.

13. Schrägförderergehäuse (30) nach Anspruch 12,
dadurch gekennzeichnet, daß jeder Befestigungsarm (45) schwenkbar an den entsprechenden Schrägförderergehäuse-Seitenwänden (36) unter Einfügung einer Bandförderer-Spannbaugruppe (40) befestigt ist, die folgende Teile einschließt:
- ein mit Gewinde versehenes Spannbauteil (49), das an einem Ende den Arm (45) schwenkbar haltert und einstellbar entlang seiner Länge in einer mit einer Öffnung versehenen Halterung (50) auf der entsprechenden Schrägförderergehäuse-Seitenwand (36) aufgenommen ist, und
- elastische Einrichtungen (51), die sich zwischen der Halterung (50) und einem einstellbaren Anschlag (52) auf dem Gewindespannbauteil (49) erstrecken, wobei die Anordnung derart ist, daß die elastischen Einrichtungen (51) den entsprechenden Befestigungsarm (45) in Richtung auf die Einlaßöffnung (37) in dem Schrägförderergehäuse-Hauptteil (34) drücken.

14. Schrägförderergehäuse (30) nach Anspruch 10,
dadurch gekennzeichnet, daß:
a) die Seitenplatten (77) der Vorderflächenbaugruppe (75) außerhalb des Schrägförderergehäuse-Hauptteils (34) entlang dessen Seitenwänden (36) angeordnet sind,
b) die Vorderflächenbaugruppe (75) weiterhin zwei mit Querabstand angeordnete zusätzliche Flansche (121) einschließt, die sich nach hinten in den Kanal (35) des Schrägförderergehäuse-Hauptteils (34) entlang dessen gegenüberliegenden Seitenwänden (36) erstrecken, und
c) die angetriebene Welle drehbar in dem Schrägförderergehäuse-Hauptteil (34) benachbart zu dessen Einlaßöffnung (37) über zwei mit Querabstand angeordnete Schwimmbaugruppen (60) befestigt ist, wobei jede der Schwimmbaugruppen (60) folgende Teile umfaßt:
- einen allgemein langgestreckten Befestigungsarm (45), der sich allgemein in Längsrichtung des Schrägförderergehäuse-Hauptteils (34) und in diesem erstreckt und benachbart zu einem Ende in der Nähe der Hauptteil-Einlaßöffnung (37) die angetriebene Welle drehbar lagert und benachbart zu seinem anderen, von der Einlaßöffnung (37) entfernten Ende schwenkbar an dem entsprechenden zusätzlichen Flansch (121) der Vorderflächenbaugruppe (75) gehaltert ist, wobei die Anordnung derart ist, daß die angetriebene Welle allgemein in Längsrichtung gegenüber dem Schrägförderergehäuse-Hauptteil (34) zusammen mit der Vorderflächenbaugruppe (75) einstellbar ist, und
- elastische Einrichtungen (65), die sich zwischen jedem Befestigungsarm und der entsprechenden Seitenplatte (77) der Vorderflächenbaugruppe (75) erstrecken, um die angetriebene Welle in Richtung auf eine Position in einem minimalen Abstand von dem Schrägförderergehäuse-Boden (38) zu drücken und um es im Betrieb dieser angetriebenen Welle zu ermöglichen, sich elastisch von diesem Boden (38) fort zu bewegen.

15. Schrägförderergehäuse (30) nach Anspruch 14,
dadurch gekennzeichnet, daß:
- jede elastische Einrichtung (65) mit einem entsprechenden Befestigungsarm (45) über einen Befestigungszapfen (61) verbunden ist, der an dem Arm (45) befestigt ist und sich in Querichtung von diesem nach außen über entsprechende Öffnungen (123, 62) in dem entsprechenden zusätzlichen Flansch (121) und der entsprechenden Schrägförderergehäuse-Seitenwand (36) erstreckt, und
- die elastischen Einrichtungen (65) sich zwischen dem Zapfen (61) und einer Halterung (64) auf der entsprechenden Seitenplatte der Vorderflächenbaugruppe an einer Stelle außerhalb des Schrägförderergehäuse-Hauptteils (34) und entlang der entsprechenden Seitenwand (36) hiervon erstrecken.

16. Schrägförderergehäuse (30) nach einem der vorhergehenden Ansprüche,
dadurch gekennzeichnet, daß die Schneidwerk- oder Erntevorsatzgeräte-Verbindungseinrichtungen eine Wiegenbaugruppe (101) mit Schwenkeinrichtungen (110) einschließen, die die Wiegenbaugruppe (101) schwenkbar an der Vorderflächenbaugruppe (75) für eine Schwenkbewegung in einer im wesentlichen vertikalen Querebene befestigen, wobei die Wiegenbaugruppe (101) eine Erntematerial-Durchlaßöffnung (102) aufweist, die im wesentlichen mit der Erntematerial-Durchlaßöffnung (74) in der Vorderflächenbaugruppe (75) ausgerichtet und allgemein mit der Erntematerial-Auslaßöffnung (24) in einem Schneidwerk oder Erntevorsatzgerät (20) ausrichtbar ist, und wobei die Wiegenbaugruppe (101) weiterhin Schneidwerk- oder Erntevorsatzgerät-Verbindungseinrichtungen (103) zur Befestigung eines Schneidwerkes oder Erntevorsatzgerätes (20) an diesem zur Verhinderung einer Relativbewegung zwischen diesen Teilen umfaßt.

17. Schrägförderergehäuse (30) nach einem der Ansprüche 10-15, bzw. Anspruch 16 unter Rückbeziehung auf einen der Ansprüche 10 - 15,
dadurch gekennzeichnet, daß der vorderste Teil (43) der Bahn (42) des endlosen Bandförderers (32) aus dem Inneren des Schrägförderergehäuse-Kanals (35) durch die Erntematerial-Durchlaßöffnung (74) in der Vorderflächenbaugruppe (75) bzw. durch die Erntematerial-Durchlaßöffnungen (74, 102) in der Vorderflächenbaugruppe (75) und der Wiegenbaugruppe (101) hindurch und in die Nähe der Erntematerial-Auslaßöffnung (24) eines Schneidwerkes oder Erntevorsatzgerätes (20) vorspringt, wenn das letztere an dem Schrägförderergehäuse (30) befestigt ist.

## Revendications

1. Carter de chargement (30) adapté pour permettre le montage de manière détachable d'un bec cueilleur de moissonnage de récolte (20) sur une unité de base de moissonneuse-batteuse mobile (11) et comportant :
- une partie formant corps allongée (34) définissant un passage (35) qui se termine, au niveau d'extrémités opposées, par des ouvertures d'entrée et de sortie de récolte (37, 29), et apte à être raccordée, d'une manière générale, au niveau de ladite ouverture de sortie (29), à l'unité de base (11) en ayant, en service, son ouverture d'entrée (37) positionnée à proximité du bec cueilleur (20) supporté par le carter de chargement (30) sur ladite unité de base (11);
- des moyens convoyeurs de récolte (32) logés à l'intérieur du passage (35) pour, en service, transporter des produits de récolte longitudinalement à travers ledit passage (35), du bec cueilleur (20) à l'unité de base (11);
- un ensemble formant face avant (75) relié d'une manière mobile par pivotement à la partie formant corps (34), d'une manière générale, à proximité de l'ouverture d'entrée (37) de celle-ci pour être ajusté sélectivement par rapport à elle par pivotement autour d'un axe de pivotement transversal (92); ledit ensemble formant face avant (75) comportant des moyens de raccordement de bec cueilleur (101, 103) destinés à relier le bec cueilleur (20) à lui dans une position faisant saillie vers l'avant, et possédant, à travers lui, une ouverture de passage de récolte (74) qui coïncide sensiblement avec l'ouverture d'entrée de récolte (37) de la partie formant corps et pouvant, d'une manière générale, coïncider avec une ouverture de sortie de récolte (24) prévue dans le bec cueilleur (20); et
- des moyens de verrouillage (79) destinés à assujettir d'une manière fixe l'ensemble formant face avant (75) dans n'importe quelle position d'ajustement sélectionnée par rapport à la partie formant corps (34) du carter de chargement; et
caractérisé en ce que
le montage pivotant (92) de l'ensemble formant face avant (75) peut, en outre, être également ajusté, d'une manière générale, longitudinalement par rapport à la partie formant corps (34) du carter de chargement.

2. Carter de chargement (30) selon la revendication 1, caractérisé en ce que :
- la partie formant corps (34) du carter de chargement comporte des parois latérales opposées transversalement (36);
- l'ensemble formant face avant (75) comporte des tôles latérales opposées transversalement (77) qui s'étendent vers l'arrière le long des parois latérales (36); et
- des premiers et seconds moyens d'ajustement relient entre eux d'une manière ajustable l'ensemble formant face avant (75) et la partie formant corps (34); les premiers moyens d'ajustement comprenant deux premiers ensembles d'ajustement (82) espacés l'un de l'autre transversalement dont chacun est relié d'une manière pivotante à l'une des tôles latérales (77) de l'ensemble formant face avant (75) et supporté d'une manière ajustable sur la paroi latérale (36) correspondante de la partie formant corps; la conception étant telle que les connexions pivotantes (92) desdits premiers ensembles d'ajustement (82) avec l'ensemble formant face avant (75) sont alignées transversalement l'une par rapport à l'autre et déterminent l'axe de pivotement autour duquel l'ensemble formant face avant (75) pivote lors d'un actionnement des seconds moyens d'ajustement.

3. Carter de chargement (30) selon la revendication 2, caractérisé en ce que les seconds moyens d'ajustement comportent également deux seconds ensembles d'ajustement (81) espacés l'un de l'autre transversalement dont chacun est relié d'une manière pivotante à l'une des tôles latérales (77) de l'ensemble formant face avant (75) à une certaine distance de la connexion pivotante (92) du premier ensemble d'ajustement (82) correspondant, et supporté d'une manière ajustable sur la paroi latérale (36) correspondante de la partie formant corps, là aussi à une certaine distance de la connexion (93, 94) du premier ensemble d'ajustement (82) correspondant, à ladite paroi latérale (36).

4. Carter de chargement (30) selon la revendication 3, caractérisé en ce que chacun des premiers et seconds ensembles d'ajustement (82, 81) comporte :
- une tige vissée (90, 83) reliée d'une manière pivotante, au niveau de l'une de ses extrémités, à la tôle latérale (77) correspondante de l'ensemble formant face avant (75), et reçue d'une manière ajustable, sur sa longueur, dans un support à orifice (94, 84) prévu sur la paroi latérale (36) correspondante de la partie formant corps (34) du carter de chargement; et
- des écrous d'ajustement (93, 88) prévus d'une manière ajustable sur ladite tige (90, 83) au niveau de côtés opposés dudit support (94, 84) correspondant.

5. Carter de chargement (30) selon la revendication 4, caractérisé en ce que la tige vissée (90) de chacun des premiers ensembles d'ajustement (82) est reliée, au niveau de ladite extrémité, à une douille (91) reçue d'une manière pivotante sur une broche de montage transversale (92) prévue sur la tôle latérale (77) correspondante de l'ensemble formant face avant (75).

6. Carter de chargement (30) selon la revendication 4 ou 5, caractérisé en ce que le support à orifice (84) associé à chacun desdits seconds ensembles d'ajustement (81) présente une forme courbée, son côté creux étant orienté à distance de l'ensemble formant face avant (75), et reçoit, dans ledit côté creux, un organe sphérique (89) coulissé sur la tige vissée (83) associée, entre ce côté creux dudit support (84) et l'écrou d'ajustement (88) adjacent.

7. Carter de chargement (30) selon l'une quelconque des revendications 2 à 6, caractérisé en ce que les moyens de verrouillage comportent :
- des trous de fixation (80) définis dans chacune des parois latérales (36) du carter de chargement;
- des orifices de fixation (79) définis dans chacune des tôles latérales (77) de l'ensemble formant face avant (75); lesdits orifices de fixation (79) définis dans les tôles latérales (77) étant aptes à coïncider avec les trous de fixation (80) définis dans les parois latérales (36) correspondantes; et
- des boulons (79) aptes à être insérés dans des trous (80) et des orifices (79) correspondants pour verrouiller sélectivement l'ensemble formant face avant (75) dans l'une de multiples positions alternées de pivotement et/ou d'ajustement longitudinal.

8. Carter de chargement (30) selon la revendication 7, caractérisé en ce que :
- les trous de fixation (80) et les orifices de fixation (79) sont formés par des fentes allongées définies dans lesdites parois latérales (36) du carter de chargement, respectivement dans lesdites tôles latérales (77) de l'ensemble formant face avant (75), et qui se coupent entre elles lorsqu'on les considère en vue latérale; et
- les boulons de fixation (79) sont aptes à être insérés au niveau des intersections desdites fentes allongées respectivement prévues dans les parois latérales (36) du carter de chargement et dans les tôles latérales (77) correspondantes de l'ensemble formant face avant (75).

9. Carter de chargement (30) selon l'une quelconque des revendications précédentes, caractérisé en ce que :
- l'ensemble formant face avant (75) comporte une poutre transversale inférieure (72) qui délimite, en partie, l'ouverture de passage de récolte (74) définie dans ledit ensemble (75); ladite poutre (72) étant placée, d'une manière générale, au niveau du bord d'admission (28) du fond (38) du carter de chargement; et
- un organe formant plaque d'étanchéité élastique (73) relié à ladite poutre (72) s'étend depuis celle-ci de manière à recouvrir ledit bord d'admission (28), afin de permettre un ajustement sensiblement longitudinal et/ou pivotant de l'ensemble formant face avant (75) par rapport à la partie formant corps (34) du carter de chargement.

10. Carter de chargement (30) selon l'une quelconque des revendications 2 à 9, caractérisé en ce que :
- les moyens convoyeurs de récolte comportent un convoyeur à tapis sans fin (32) qui s'étend à l'intérieur du passage (35) de la partie formant corps (34) du carter de chargement autour d'un arbre menant (39) adjacent à l'ouverture de sortie (29) et d'un arbre mené adjacent à l'ouverture d'entrée (37);
- l'axe de pivotement (92) de l'ensemble formant face avant (72) sur la partie formant corps (34) du carter de chargement s'étend sensiblement coaxialement avec ledit arbre mené ou sensiblement parallèlement audit arbre mené et au voisinage de celui-ci; et
- les seconds moyens d'ajustement (81) s'étendent entre l'ensemble formant face avant (75) et la partie formant corps (34) du carter de chargement, à une certaine distance au-dessus dudit arbre mené.

11. Carter de chargement (30) selon la revendication 10, caractérisé en ce que l'arbre mené est monté rotatif à l'intérieur de la partie formant corps (34) du carter de chargement par l'intermédiaire de deux ensembles de flottement (60) espacés l'un de l'autre transversalement; chacun desdits ensembles (60) comportant :
- un bras de montage sensiblement allongé (45) qui s'étend, d'une manière générale, dans le sens de la longueur et à l'intérieur de la partie formant corps (34) du carter de chargement et supporte d'une manière mobile en rotation, à proximité de l'une de ses extrémités proche de l'ouverture d'entrée (37) de la partie formant corps, ledit arbre mené, tout en étant supporté d'une manière pivotante, au niveau de son autre extrémité distante de ladite ouverture d'entrée (37), sur la paroi latérale (36) correspondante de la partie formant corps (34) du carter de chargement; et
- des moyens élastiques (65) qui s'étendent entre chaque bras de montage (45) et la paroi latérale (36) correspondante de la partie formant corps (34) du carter de chargement pour solliciter l'arbre mené vers une position située à une distance minimale du fond (38) du carter de chargement et pour, en service, permettre à cet arbre mené de s'éloigner élastiquement dudit fond (38).

12. Carter de chargement (30) selon la revendication 11, caractérisé en ce que le montage pivotant de chacun des bras de montage (45) sur la paroi latérale (36) correspondante du carter de chargement est ajustable, d'une manière générale, dans le sens de la longueur de la partie formant corps (34) du carter de chargement, et de l'ensemble formant face avant (75) supporté sur celle-ci.

13. Carter de chargement (30) selon la revendication 12, caractérisé en ce que chacun des bras de montage (45) est monté pivotant sur les parois latérales (36) correspondantes du carter de chargement par l'intermédiaire d'un ensemble de tension de convoyeur à tapis (40) comportant :
- un organe de tension vissé (49) qui supporte d'une manière pivotante, au niveau de l'une de ses extrémités, ledit bras (45), et est reçu d'une manière ajustable, sur sa longueur, dans un support à orifice (50) prévu sur la paroi latérale (36) correspondante du carter de chargement; et
- des moyens élastiques (51) qui s'étendent entre ledit support (50) et une butée ajustable (52) prévue sur l'organe de tension vissé (49); la conception étant telle que les moyens élastiques (51) sollicitent le bras de montage (45) correspondant dans la direction orientée vers l'ouverture d'entrée (37) définie dans la partie formant corps (34) du carter de chargement.

14. Carter de chargement (30) selon la revendication 10, caractérisé en ce que :
a) les tôles latérales (77) de l'ensemble formant face avant (75) sont positionnées à l'extérieur de la partie formant corps (34) du carter de chargement, le long des parois latérales (36) de celle-ci;
b) l'ensemble formant face avant (75) comporte également deux brides supplémentaires (121) espacées l'une de l'autre transversalement qui s'étendent vers l'arrière jusque dans le passage (35) de la partie formant corps (34) du carter de chargement, le long des parois latérales opposées (36) de celle-ci; et
c) l'arbre mené est monté rotatif à l'intérieur de la partie formant corps (34) du carter de chargement, à proximité de l'ouverture d'entrée (37) de celle-ci par l'intermédiaire de deux ensembles de flottement (60) espacés l'un de l'autre transversalement; chacun desdits ensembles de flottement (60) comportant :
- un bras de montage sensiblement allongé (45) qui s'étend, d'une manière générale, dans le sens de la longueur et à l'intérieur de la partie formant corps (34) du carter de chargement et supporte d'une manière mobile en rotation à proximité de l'une de ses extrémités proche de l'ouverture d'entrée (37) de la partie formant corps ledit arbre mené, tout en étant supporté d'une manière pivotante, à proximité de son autre extrémité distante de ladite ouverture d'entrée (37), sur la bride supplémentaire (121) correspondante de l'ensemble formant face avant (75); la conception étant telle que l'arbre mené est ajustable, d'une manière générale, longitudinalement par rapport à la partie formant corps (34) du carter de chargement en synchronisme avec l'ensemble formant face avant (75); et
- des moyens élastiques (65) s'étendent entre chaque bras de montage (45) et la tôle latérale (77) correspondante de l'ensemble formant face avant (75) pour solliciter l'arbre mené vers une position située à une distance minimale du fond (38) du carter de chargement et pour, en service, permettre à cet arbre mené de s'éloigner élastiquement dudit fond (38).

15. Carter de chargement (30) selon la revendication 14, caractérisé en ce que :
- chacun des moyens élastiques (65) est relié à un bras de montage (45) correspondant par l'intermédiaire d'une broche de montage (61) assujettie audit bras (45) et s'étendant transversalement vers l'extérieur depuis celui-ci à travers des orifices (123, 62) correspondants définis dans la bride supplémentaire (121) correspondante et la paroi latérale (36) correspondante du carter de chargement; et
- lesdits moyens élastiques (65) s'étendent entre ladite broche (61) et un support (64) prévu sur la tôle latérale (77) correspondante de l'ensemble formant face avant (75) au niveau d'un emplacement situé à l'extérieur de la partie formant corps (34) du carter de chargement et le long de la paroi latérale (36) correspondante de celle-ci.

16. Carter de chargement (30) selon l'une quelconque des revendications précédentes, caractérisé en ce que les moyens de raccordement de bec cueilleur comportent un ensemble formant berceau (101) pourvu de moyens de pivotement (110) reliant d'une manière pivotante ledit ensemble formant berceau (101) à l'ensemble formant face avant (75) en vue d'un mouvement de pivotement dans un plan transversal sensiblement vertical; ledit ensemble formant berceau (101) comportant, à travers lui, une ouverture de passage de récolte (102) qui coïncide sensiblement avec l'ouverture de passage de récolte (74) définie dans l'ensemble formant face avant (75), et avec l'ouverture de sortie de récolte (24) définie dans un bec cueilleur (20), ledit ensemble formant berceau (101) comportant également des moyens de raccordement de bec cueilleur (103) destinés à relier le bec cueilleur (20) à lui, afin d'empêcher un mouvement relatif entre eux.

17. Carter de chargement (30) selon l'une quelconque des revendications 10 à 15, respectivement la revendication 16, lorsque celle-ci est dépendante de l'une quelconque desdites revendications 10 à 15, caractérisé en ce que la partie extrême avant (43) de la trajectoire (42) du convoyeur à tapis sans fin (32) s'avance depuis l'intérieur du passage (35) du carter de chargement, à travers l'ouverture de passage de récolte (74) définie dans l'ensemble formant face avant (75), respectivement les ouvertures de passage de récolte (74, 102) prévues dans l'ensemble formant face avant (75) et l'ensemble formant berceau (101), jusqu'au voisinage de l'ouverture de sortie de récolte (24) d'un bec cueilleur (20), lorsque ce dernier est relié au carter de chargement (30).
